# EUROPÄISCHE PATENTSCHRIFT

(11) **EP 4 571 666 B1**
(45) Veröffentlichungstag und Bekanntmachung des Hinweises auf die Patenterteilung: **18.02.2026**
(21) Anmeldenummer: 24214006.9
(22) Anmeldetag: 19.11.2024
(51) Int. Cl.: G06V 10/141, G06V 10/147, G06V 10/80, G06V 20/52, G06V 30/14, G06V 30/19, G06V 30/424, H04N 23/45, H04N 23/56, H04N 23/67, H04N 23/90

(54) **KAMERASYSTEM FÜR EINE ETIKETTENERKENNUNGSVORRICHTUNG**
CAMERA SYSTEM FOR A TAG DETECTION DEVICE
SYSTÈME DE CAMÉRA POUR UN DISPOSITIF DE RECONNAISSANCE D'ÉTIQUETTES

(30) Priorität: 14.12.2023 DE 102023135245
(43) Veröffentlichungstag der Anmeldung: 18.06.2025
(73) Patentinhaber: SICK AG, 79183 Waldkirch (DE)
(72) Erfinder: MUTTER, Matthias, 79211 Denzlingen (DE)
(74) Vertreter: Manitz Finsterwald Patent- und Rechtsanwaltspartnerschaft mbB

(56) Entgegenhaltungen:
- EP-A1- 3 687 155
- DE-A1- 10 207 538
- US-A1- 2013 015 244
- US-A1- 2017 372 157
- US-A1- 2022 073 280
- US-A1- 2022 303 445

## Beschreibung

Die Erfindung betrifft ein Kamerasystem für eine Etikettenerkennungsvorrichtung, wobei das Kamerasystem dazu ausgebildet ist, 1D und/oder oder 2D Etikettencodes auf Objekten zu erkennen, die insbesondere durch ein Förderband bewegt werden, wobei das Kamerasystem eine erste Kameraeinheit mit einem ersten Kameraobjektiv und einem ersten Bildsensor sowie zumindest einen Prozessor umfasst.

Derartige Kamerasysteme werden beispielsweise eingesetzt, um in einem Logistikzentrum Objekte wie beispielsweise Pakete auf einem Förderband zu erfassen und zu identifizieren. Hierbei kann der Abstand zwischen dem auf dem Förderband befindlichen und zu erfassenden Objekt und dem Kamerasystem eine hohe Varianz aufweisen, welche bei einem oberhalb des Förderbands angeordneten Kamerasystem, d.h. bei einer "Top-Lesung", durch Objekte mit stark unterschiedlicher Höhe verursacht wird. Bei seitlich neben dem Förderband angeordneten Kamerasystemen, d.h. bei einer "Seitenlesung", führen breite Förderbänder und nicht ausgerichtete Objekte zu großen Unterschieden des besagten Abstandes.

Die großen Unterschiede in dem Abstand zwischen dem Kamerasystem und dem zu erfassenden und zu identifizierenden Objekt stellen hohe Anforderungen an die Schärfentiefe und/oder den Fokus der Kamerasysteme. Die Kamerasysteme müssen sehr leistungsfähig sein und über eine kurze Reaktionszeit verfügen und somit schnell reagieren, um trotz derart unterschiedlicher Bedingungen immer eine zuverlässige Lesung und Decodierung der 1D und 2D Etikettencodes zu gewährleisten.

Kamerasysteme für derartige Anwendungen können als Zeilenkameras oder auch als flächige 2D-Kameras ausgebildet sein. Lösungen für die oben genannten Anforderungen zielen bei Zeilenkameras bisher darauf ab, eine sehr schnelle mechanische Fokusverstellung des Kameraobjektivs mit einem leistungsstarken Prozessor zu kombinieren. So lassen sich zuverlässige Decodierungen bzw. Identifizierungen bis zu einer Bandgeschwindigkeit des Förderbands von 4,5 m/s realisieren. Alternativ oder zusätzlich kann auch eine Beleuchtungsvorrichtung vorgesehen sein, durch deren starke Beleuchtung eine große Schärfentiefe erreicht werden kann und somit unterschiedliche Abstände zwischen dem Kamerasystem und dem Objekt ausgeglichen werden können. Hierbei wird die große Schärfentiefe durch eine Blende mit großer Blendenzahl erreicht, was einen kleineren Lichtdurchlass bedingt. Zur Erhöhung des Lichtdurchlasses weisen daher die Beleuchtungsvorrichtungen eine große Anzahl leistungsstarker LEDs auf, welche zum einen den Bauraum des Kamerasystems vergrößern und zum anderen zu einem hohen Leistungsverbrauch während des Betriebs des Kamerasystems führen.

Für eine zuverlässige Erfassung und Identifizierung von Objekten benötigen Kamerasysteme mit Zeilenkameras somit eine mechanische Fokusverstellung und eine hohe Rechenleistung, um die großen Datenmengen verarbeiten zu können. Eine mechanische Fokusverstellung ist jedoch teuer, defektanfällig und aufwändig in der Entwicklung und zu Integration. Zusätzlich kann die Anordnung einer Beleuchtungsvorrichtung mit starker Leistungsaufnahme in dem Kamerasystem notwendig sein, um die Schärfentiefe zu vergrößern und zu erweitern. All dies macht diese Systeme teuer, aufwändig, verschleißanfällig und fehleranfällig.

Auch bei Kamerasystemen mit 2D Kameras wird bisher eine dynamische Fokusverstellung eingesetzt, um den oben genannten Anforderungen gerecht zu werden. Nachteilig wirkt sich hier jedoch aus, dass die Fokusverstellung relativ langsam erfolgt, wodurch die Zuverlässigkeit des Kamerasystems leidet.

Nachteilig wirkt sich wie bei Zeilenkameras mit mechanischer Fokusverstellung darüber hinaus aus, dass der Abstand zwischen dem Kamerasystem und dem Objekt bereits bekannt sein muss, um den Fokus korrekt einstellen zu können. Diese Abstandsinformation kann beispielsweise durch eine vorhergehende Volumenmessung des Objekts ermittelt werden. Die benötigte Abstandsinformation macht den Aufbau und die Verkabelung eines Systems aufwändiger und erhöht somit die Kosten des Systems. Ein weiterer Nachteil ergibt sich aus der Notwendigkeit eines Objekt-Trackings, um festzustellen, wann das Objekt im Sichtfeld des Kamerasystems ist.

Ein Kamerasystem gemäß dem Oberbegriff des Anspruchs 1 ist aus US 2017/372157 A1 bekannt. Weitere Kamerasysteme sind in EP 3 687 155 A1, DE 102 07 538 A1, US 2013/015244 A1, US 2022/073280 A1 und US 2022/303445 A1 beschrieben.

Es ist Aufgabe der Erfindung, ein verbessertes Kamerasystem für eine Etikettenerkennungsvorrichtung bereitzustellen, welches effizient, zuverlässig, verschleißarm und kostengünstig ist.

Die Aufgabe wird durch ein Kamerasystem mit den Merkmalen des Anspruchs 1 gelöst und insbesondere dadurch, dass das Kamerasystem zumindest eine zweite Kameraeinheit mit einem zweiten Kameraobjektiv und einem zweiten Bildsensor umfasst, wobei der erste Bildsensor eine erste Bildauflösung aufweist, welche kleiner ist als eine zweite Bildauflösung des zweiten Bildsensors, wobei der erste Bildsensor der ersten Kameraeinheit dazu ausgebildet ist, ein Bild eines Objektes in einem ersten Schärfebereich aufzunehmen, wobei der zweite Bildsensor der zweiten Kameraeinheit dazu ausgebildet ist, ein Bild eines (z.B. desselben und/oder auch eines anderen) Objektes in einem zweiten Schärfebereich aufzunehmen, wobei der zweite Schärfebereich einen größeren Abstand zum Kamerasystem aufweist als der erste Schärfebereich, und wobei der Prozessor dazu ausgebildet ist, Bilddaten des ersten Bildsensors und Bilddaten des zweiten Bildsensors zu verarbeiten.

Das Kamerasystem verfügt somit zumindest über zwei gesonderte Kameraeinheiten mit jeweils eigenen Kameraobjektiven und Bildsensoren. Die erste Kameraeinheit ist dazu ausgebildet, ein Bild eines Objektes in einem ersten Schärfebereich aufzunehmen, der einen kleineren Abstand zum Kamerasystem aufweist. Die erste Kameraeinheit nimmt also Bilder beispielsweise im Nahbereich des Kamerasystems und bei kleineren Abständen zwischen dem Kamerasystem und dem Objekt auf. Die zweite Kameraeinheit ist dazu ausgebildet, ein Bild eines Objektes in einem zweiten Schärfebereich aufzunehmen, der einen größeren Abstand zum Kamerasystem aufweist. Die zweite Kameraeinheit nimmt somit Bilder beispielsweise im Mittel- oder Fernbereich des Kamerasystems und daher bei größeren Abständen zwischen dem Kamerasystem und dem Objekt auf. Der Schärfebereich versteht sich hierbei als der räumliche Bereich vor und hinter der Fokus- bzw. Schärfeebene, wobei in dem Schärfebereich das Objekt durch das jeweilige Objektiv scharf abgebildet wird. Der Abstand zu einem jeweiligen Schärfebereich kann insbesondere von dem Kamerasystem zu der Schärfeebene des jeweiligen Schärfebereichs oder von dem Kamerasystem zu dem Kamerasystem nähesten Punkt des Schärfebereichs gemessen werden.

Der Prozessor ist dazu ausgebildet, Bilddaten des ersten Bildsensors, die den Nahbereich des Kamerasystems abbilden, und Bilddaten des zweiten Bildsensors, die den Mittel- oder Fernbereich abbilden, zu verarbeiten. Die Verarbeitung erfolgt, sobald die Bilddaten des ersten Bildsensors oder des zweiten Bildsensors vorhanden und für den Prozessor zur Verarbeitung verfügbar sind. Hierbei erfolgt die Verarbeitung der Bilddaten der jeweiligen Bildsensoren bevorzugt komplett autark voneinander. Die Verarbeitung der Bilddaten des ersten Bildsensors und des zweiten Bildsensors kann somit im Prozessor gleichzeitig und simultan erfolgen.

Der Prozessor kann beispielsweise einen FPGA (Field Programmable Gate Array) umfassen, welcher für jeden Bildsensor eine eigene Verarbeitungspipeline für die Bilddaten aufweist. Der Prozessor kann weiterhin einen Applikationsprozessor umfassen, welcher z.B. über PCI-Express (PCIe) mit dem FPGA gekoppelt ist, wobei der Applikationsprozessor die Erkennung der Etikettencodes in den Bilddaten der Bildsensoren vornimmt. Bei dem Applikationsprozessor kann es sich z.B. um einen Prozessor der Serien i.MX 6, i.MX 8 oder i.MX 9 der Firma NXP handeln.

Da das Kamerasystem über zumindest zwei Bildsensoren verfügt, die jeweils z.B. einerseits den Nahbereich und andererseits den Mittel- oder Fernbereich abdecken, weist das Kamerasystem einen großen Schärfebereich auf, der sich aus der Kombination des ersten Schärfebereichs der ersten Kameraeinheit und des zweiten Schärfebereichs der zweiten Kameraeinheit ergibt. Das Kamerasystem erfasst somit sehr zuverlässig Objekte und bildet sie scharf ab, wobei große Unterschiede in den jeweiligen Abständen zwischen Kamerasystem und Objekt möglich sind.

Der erste Bildsensor weist eine erste Bildauflösung auf, welche kleiner ist als eine zweite Bildauflösung des zweiten Bildsensors. Der erste Bildsensor für den Nahbereich weist somit eine niedrigere Bildauflösung auf als der zweite Bildsensor für den Mittel- und Fernbereich, welcher wegen des größeren Abstandes zwischen Objekt und Kamerasystem eine höhere Bildauflösung hat. Bedingt durch die niedrigere Bildauflösung des ersten Bildsensors benötigt das Kamerasystem zum einen nur ein kleines Kameraobjektiv, welches geringen Auflösungsanforderungen genügt. Zum anderen stellen die niedrig-auflösenden Bilddaten des ersten Bildsensors auch geringere Anforderungen an die Rechenleistung des Prozessors zur Verarbeitung dieser Bilddaten. Beides trägt signifikant zur Reduzierung der Kosten des Kamerasystems bei.

Da das Kamerasystem nicht situativ auf unterschiedliche Abstände reagieren muss, ist zum Erreichen des großen Schärfebereichs keine manuelle oder mechanische Einstellung des Fokus oder der Blendenzahl in den jeweiligen Kameraobjektiven notwendig. In dem Kamerasystem kann deshalb auf bewegliche Teile zur Fokusverstellung verzichtet werden, was die Defektanfälligkeit des Kamerasystems vermindert. Darüber hinaus erfordert das Kamerasystem auch keine Beleuchtungsvorrichtung mit starker Leuchtleistung, wie sie bei Kamerasystemen notwendig ist, die einen großen Schärfebereich und eine große Schärfentiefe durch eine Vergrößerung der Blendenzahl erreichen.

Das erfindungsgemäße Kamerasystem ist somit verschleißarm, effizient und kostengünstig und ermöglicht eine zuverlässige Erfassung und Identifizierung von Objekten.

Vorteilhafte Ausführungsformen der Erfindung sind den abhängigen Ansprüchen, der Beschreibung und der Zeichnung zu entnehmen.

Gemäß einer Ausführungsform der Erfindung ist der erste Schärfebereich und der zweite Schärfebereich voreingestellt. Die Voreinstellung ist derart gewählt, dass die räumliche Position der Schärfebereich und/oder die Größe (d.h. die Ausdehnung) des ersten und des zweiten Schärfebereichs an die Abstandverhältnisse zwischen dem Förderband und der Position des Kamerasystems angepasst sind. Hierbei kann der erste Schärfebereich und der zweite Schärfebereich so eingestellt werden, dass der Abstandbereich des ersten Schärfebereichs bündig und ohne Unterbrechung an den Abstandbereich des zweiten Schärfebereichs angrenzt. Alternativ können die Schärfebereiche auch so eingestellt werden, dass die jeweiligen Abstandsbereiche einen Überlapp oder Überschneidung aufweisen. Als weitere Alternative können der erste und zweite Schärfebereich derart eingestellt werden, dass die jeweiligen Abstandbereiche nicht aneinander angrenzen und zwei separate Abstandsbereiche bilden, die durch eine Unterbrechung voneinander getrennt sind.

Zusätzlich zu den genannten Möglichkeiten für die Abstandsbereiche der Schärfebereiche ist es möglich, dass die Schärfebereiche räumlich beabstandet oder teilweise oder vollständig überlappend zueinander angeordnet sind. Ein räumlicher Abstand ist (trotz z.B. allein vom Abstand aneinander angrenzenden Schärfebereichen) möglich, wenn die Kameraeinheiten voneinander beabstandet sind. Die Kameraeinheiten können jeweils so ausgerichtet sein, dass sie in parallele Richtungen schauen.

Gemäß einer Ausführungsform der Erfindung bleibt der erste Schärfebereich und der zweite Schärfebereich während des Betriebs des Kamerasystems jeweils unverändert und weist jeweils den voreingestellten Wert auf. Während des Betriebs des Kamerasystems ist keine Anpassung der Schärfebereiche über eine Blenden- oder Fokuseinstellung notwendig, da das Kamerasystem nicht situativ auf unterschiedliche Abstände zwischen Objekt und Kamerasystem reagieren muss. Das erste und zweite Kameraobjektiv kann somit jeweils als ein Fix-Fokus & Fixe-Blende Kameraobjektiv ausgebildet sein. Derartige Kameraobjektive können sehr kompakt gestaltet sein und sind zudem kostengünstig. Die kompakten Kameraobjektive ermöglichen eine kompakte Ausbildung des Kamerasystems, was dessen Platzbedarf vermindert und auch eine kompaktere Ausgestaltung der Etikettenerkennungsvorrichtung ermöglicht.

Gemäß einer Ausführungsform der Erfindung weist der erste Schärfebereich eine größere Schärfentiefe auf als der zweite Schärfebereich oder umgekehrt. Dadurch kann die zweite Kameraeinheit Objekte nicht nur bei größeren Abständen, sondern auch in einem größeren Abstandsbereich scharf abbilden und somit Objekte im Mittel- und Fernbereich noch zuverlässiger erfassen.

Gemäß einer Ausführungsform der Erfindung weist der erste Bildsensor eine erste lichtempfindliche Fläche auf, die gleich groß ist wie eine zweite lichtempfindliche Fläche des zweiten Bildsensors. Der erste Bildsensor kann somit im Nahbereich einen größeren Öffnungswinkel abbilden als der zweite Bildsensor, welcher den Mittel- und Fernbereich abbildet. Die lichtempfindliche Fläche kann jeweils z.B. durch einen CMOS- und/oder CCD-Bildsensor gebildet sein.

Alternativ ist es auch möglich, dass der erste Bildsensor eine erste lichtempfindliche Fläche aufweist, die kleiner ist als eine zweite lichtempfindliche Fläche des zweiten Bildsensors. Da der erste Bildsensor den Nahbereich abbildet, kann seine lichtempfindliche Fläche kleiner gewählt werden als die lichtempfindliche Fläche des zweiten Bildsensors, der den Mittel- und Fernbereich abbildet.

Gemäß einer Ausführungsform der Erfindung weist die erste Kameraeinheit eine erste Bildwiederholrate auf, die größer ist als eine zweite Bildwiederholrate der zweiten Kameraeinheit. Der erste Kameraeinheit für den Nahbereich läuft mit einer höheren Bildwiederholrate, um alle Objekte mit kleinem Abstand zwischen Objekt und Kamerasystem bei einer schnellen Bandgeschwindigkeit des Förderbands erfassen zu können. Da der erste Bildsensor eine geringere Bildauflösung aufweist, können die Bilddaten der ersten Kameraeinheit mit geringen Anforderungen an die Rechenleistung des Prozessors verarbeitet werden. Die zweite Kameraeinheit für den Mittel- und Fernbereich kann mit einer niedrigen Bildwiederholrate laufen, da die Objekte länger im Sichtbereich der Kameraeinheit liegen. Dadurch ergeben sich auch für den Mittel- und Fernbereich niedrige Anforderungen an die Rechenleistung des Prozessors zur Verarbeitung der Bilddaten des zweiten Bildsensors.

Im Übrigen ergeben sich auch geringere Anforderungen an die aufzubringende Rechenleistung für die Suche und Identifizierung der Etikettencodes in den Bilddaten, was bei großen Bildern und entsprechend großen Datenmengen für das System sehr herausfordernd sein kann. Durch die zwei Kameraeinheiten mit unterschiedlicher Bildauflösung lässt sich auch hier eine Vereinfachung und Erleichterung erzielen.

Gemäß einer Ausführungsform der Erfindung weist die erste Kameraeinheit eine erste Bildwiederholrate auf, die gleich groß ist wie eine zweite Bildwiederholrate der zweiten Kameraeinheit. Mit anderen Worten ist die Bildaufnahme zwischen der ersten Kameraeinheit und der zweiten Kameraeinheit synchronisiert, wobei die beiden Kameraeinheiten gleichzeitig Bilder mittels der jeweiligen Bildsensoren aufnehmen. Insbesondere können die erste Kameraeinheit und die zweite Kameraeinheit mit einer niedrigen Bildwiederholrate laufen, wodurch sich niedrige Anforderungen an die Rechenleistung des Prozessors zur Verarbeitung der Bilddaten des ersten und zweiten Bildsensors ergeben.

Gemäß einer Ausführungsform der Erfindung umfasst das Kamerasystem zusätzlich eine Beleuchtungsvorrichtung, die dazu ausgebildet ist, das Objekt zu beleuchten. Die Beleuchtungsvorrichtung dient einzig der Beleuchtung der Objekte und muss nicht den Lichtverlust durch eine Blende mit hoher Blendenzahl zum Zwecke der Erhöhung der Schärfentiefe ausgleichen. Die Beleuchtungsvorrichtung kann deshalb eine moderate Leuchtleistung aufweisen, wodurch sich deren Leistungsaufnahme verringert und die Kosten des Kamerasystems reduziert werden.

Gemäß einer Ausführungsform der Erfindung sendet die Beleuchtungsvorrichtung gemäß einer Taktrate periodisch Licht aus, wobei die Taktrate mit der ersten Bildwiederholrate und/oder der zweiten Bildwiederholrate synchronisiert ist. Insbesondere bei synchronisierten Bildaufnahmen mit gleich großen Bildwiederholraten bietet eine Synchronisation der Taktrate mit der dann einzigen Bildwiederholrate den Vorteil, dass ein einziger Lichtimpuls der Beleuchtungsvorrichtung ausreicht, um gleichzeitig ein Objekt zu beleuchten, das von der ersten Kameraeinheit aufgenommen wird und ein Objekt zu beleuchten, das von der zweiten Kameraeinheit aufgenommen wird. Dadurch lassen sich die Kosten des Kamerasystems weiter vermindern.

Gemäß einer Ausführungsform der Erfindung umfasst das Kamerasystem zusätzlich eine dritte Kameraeinheit mit einem dritten Kameraobjektiv und einem dritten Bildsensor, wobei der dritte Bildsensor der dritten Kameraeinheit dazu ausgebildet ist, ein Bild eines Objektes in einem dritten Schärfebereich aufzunehmen, wobei der dritte Schärfebereich einen größeren Abstand zum Kamerasystem aufweist als der zweite Schärfebereich, und wobei der Prozessor dazu ausgebildet ist, Bilddaten des dritten Bildsensors zu verarbeiten. In dieser Ausführungsform kann beispielsweise der Nahbereich durch die erste Kameraeinheit, der Mittelbereich durch die zweite Kameraeinheit und der Fernbereich durch die dritte Kameraeinheit abgedeckt werden. Dies ermöglicht gegebenenfalls eine bessere Abstimmung der jeweiligen Schärfebereiche und eine einfachere Abdeckung des gesamten relevanten Abstandbereichs zwischen Objekt und Kamerasystem.

Gemäß einer Ausführungsform der Erfindung ist der dritte Schärfebereich voreingestellt und bleibt während des Betriebs des Kamerasystems unverändert. Wie das erste und das zweite Kameraobjektiv kann auch das dritte Kameraobjektiv als ein Fix-Fokus & Fixe-Blende Objektiv ausgebildet sein. Der dritte Schärfebereich kann derart eigestellt sein, dass die Abstandsbereiche des ersten Schärfebereichs, des zweiten Schärfebereichs und des dritten Schärfebereichs jeweils bündig aneinander anschließen. Jedoch sind auch Überschneidungen der jeweiligen Abstandsbereiche oder Unterbrechungen zwischen benachbarten Abstandsbereichen möglich.

Gemäß einer Ausführungsform der Erfindung weist der dritte Schärfebereich eine Schärfentiefe auf, die zumindest gleich groß ist wie die Schärfentiefe des zweiten Schärfebereichs. Die dritte Kameraeinheit kann somit Objekte bei größeren Abständen und in einem großen Abstandsbereich scharf abbilden und eignet sich somit insbesondere für die Erfassung von Objekten im Fernbereich des Kamerasystems. Alternativ können der erste, zweite und dritte Schärfebereich jeweils unterschiedliche Schärfentiefen aufweisen, insbesondere größere Schärfentiefen mit steigendem Abstand zum Kamerasystem.

Gemäß einer Ausführungsform der Erfindung weist der dritte Bildsensor eine dritte Bildauflösung auf, welche größer ist als die erste Bildauflösung des ersten Bildsensors, insbesondere wobei die dritte Bildauflösung zumindest gleich groß ist wie die zweite Bildauflösung des zweiten Bildsensors. Insbesondere kann der dritte Bildsensor gleich gestaltet sein wie der zweite Bildsensor.

Gemäß einer Ausführungsform der Erfindung weist der dritte Bildsensor eine dritte lichtempfindliche Fläche auf, welche zumindest gleich groß ist wie die zweite lichtempfindliche Fläche des zweiten Bildsensors. Insbesondere kann der dritte Bildsensor gleich gestaltet sein wie der zweite Bildsensor.

Gemäß einer Ausführungsform der Erfindung weist die dritte Kameraeinheit eine dritte Bildwiederholrate auf, welche kleiner ist als eine erste Bildwiederholrate der ersten Kameraeinheit, insbesondere wobei die dritte Bildwiederholrate höchstens gleich groß ist wie die zweite Bildwiederholrate. Die dritte Kameraeinheit, beispielsweise für den Fernbereich, erfasst Objekte bei größeren Abständen zwischen Objekt und Kamerasystem. Die dritte Kameraeinheit kann deshalb mit einer niedrigen Bildwiederholrate laufen, da die Objekte länger im Sichtbereich der Kameraeinheit liegen.

Gemäß einer Ausführungsform der Erfindung weist die dritte Kameraeinheit eine dritte Bildwiederholrate auf, welche gleich groß ist wie die erste Bildwiederholrate der ersten Kameraeinheit und die zweite Bildwiederholrate der zweiten Kameraeinheit. Mit anderen Worten ist die Bildaufnahme zwischen der ersten Kameraeinheit, der zweiten und der dritten Kameraeinheit synchronisiert, wobei alle drei Kameraeinheiten gleichzeitig Bilder auf den jeweiligen Bildsensoren aufnehmen.

Gemäß einer Ausführungsform der Erfindung ist die Taktrate der Beleuchtungsvorrichtung mit der ersten Bildwiederholrate und/oder der zweiten Bildwiederholrate und/oder der dritten Bildwiederholrate synchronisiert. Insbesondere bei synchronisierten Bildaufnahmen mit gleich großen Bildwiederholraten bietet eine Synchronisation der Taktrate mit der dann einzigen Bildwiederholrate den Vorteil, dass ein einziger Lichtimpuls der Beleuchtungsvorrichtung ausreicht, um gleichzeitig ein Objekt zu beleuchten, dass von der ersten Kameraeinheit aufgenommen wird, ein Objekt zu beleuchten, dass von der zweiten Kameraeinheit aufgenommen wird und ein Objekt zu beleuchten, dass von der dritten Kameraeinheit aufgenommen wird. Dadurch lassen sich die Kosten des Kamerasystems weiter vermindern.

Gemäß einer Ausführungsform der Erfindung ist die jeweilige Kameraeinheit als Zeilenkamera oder als 2D-Kamera ausgebildet. Das Kamerasystem lässt sich sowohl mit Zeilenkameras als auch mit 2D-Kameras implementieren und ermöglicht für beide Kameratypen eine kostengünstige und zuverlässige Erfassung und Identifizierung von Objekten.

Die Aufgabe wird zudem durch Etikettenerkennungsvorrichtung gelöst, welche dazu ausgebildet ist, 1D und/oder oder 2D Etikettencodes auf Objekten zu identifizieren und zu decodieren, die durch ein Förderband bewegt werden, umfassend ein oben genanntes Kamerasystem. Bei den 1D und/oder 2D Etikettencodes kann es sich beispielsweise um Barcodes, QR-Codes, Zielcodes (für Briefe), Data-Matrix-2D-Codes oder dergleichen handeln. Das Förderband kann Bestandteil der Etikettenerkennungsvorrichtung sein.

Das Kamerasystem ist dazu ausgebildet, Bilder der insbesondere auf dem Förderband bewegten Objekte auf den jeweiligen Bildsensoren aufzunehmen und in einem Prozessor zu verarbeiten.

Im Übrigen gelten die Aussagen zu dem erfindungsgemäßen Kamerasystem für die erfindungsgemäße Etikettenerkennungsvorrichtung entsprechend, dies gilt insbesondere hinsichtlich Vorteilen und Ausführungsformen. Ebenso versteht es sich, dass sämtliche hierin genannten Merkmale miteinander kombinierbar sind, sofern nicht explizit etwas Gegenteiliges angegeben ist.

Die Erfindung wird nachfolgend lediglich beispielhaft anhand der Figuren erläutert.
- Fig. 1: zeigt eine schematische Seitenansicht einer Etikettenerkennungsvorrichtung mit einer Ausführungsform eines erfindungsgemäßen Kamerasystems,
- Fig. 2: zeigt eine schematische Unteransicht der Ausführungsform des Kamerasystems der Fig.1,
- Figs. 3: bis 8 zeigen verschiedene Ausführungsformen des Prozessors des Kamerasystems.

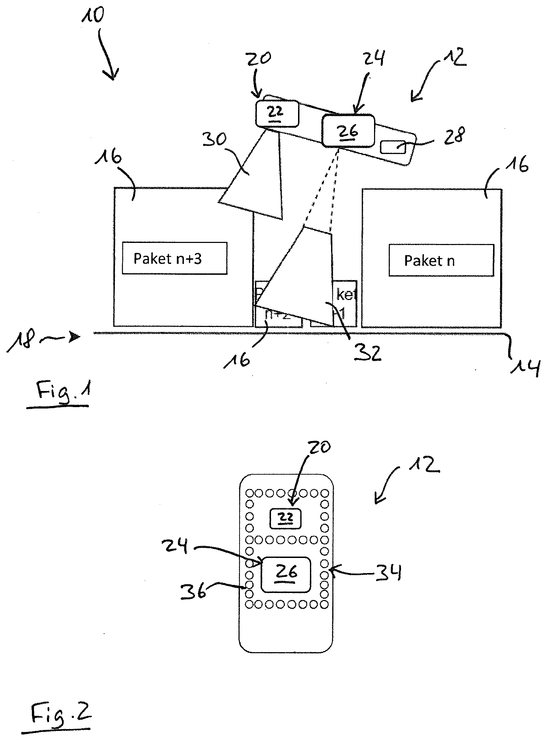

Fig. 1 zeigt eine schematische Seitenansicht einer Etikettenerkennungsvorrichtung 10 mit einer Ausführungsform eines erfindungsgemäßen Kamerasystems 12. Das Kamerasystem 12 ist oberhalb eines Förderbands 14 angeordnet, auf welchem mehrere Pakete 16 (d.h. Objekte) in Förderrichtung 18 bewegt werden.

Das Kamerasystem 12 umfasst eine erste Kameraeinheit 20 mit einem ersten Bildsensor 22 und einem nicht gezeigten ersten Kameraobjektiv und eine zweite Kameraeinheit 24 mit einem zweiten Bildsensor 26 und einem nicht gezeigten zweiten Kameraobjektiv. Die erste Kameraeinheit 20 und die zweite Kameraeinheit 24 sind jeweils in Richtung des Förderbands 14 ausgerichtet. Das Kamerasystem 12 umfasst weiterhin einen Prozessor 28, welcher dazu ausgebildet ist, Bilddaten des ersten Bildsensors 22 und des zweiten Bildsensors 26 zu verarbeiten. Das erste und zweite Kameraobjektiv ist jeweils als ein Fix-Fokus & Fixe-Blende Objektiv ausgebildet, wobei der jeweilige Fokus und die jeweilige Schärfentiefe voreingestellt sind und während des Betriebs der Etikettenerkennungsvorrichtung 10 und des Kamerasystems 12 die voreingestellten Werte unverändert beibehalten.

Der erste Bildsensor 22 der ersten Kameraeinheit 20 ist dazu ausgebildet, ein Bild eines Paketes 16 in einem ersten Schärfebereich 30 aufzunehmen, während der zweite Bildsensor 26 der zweiten Kameraeinheit 24 dazu ausgebildet ist, ein Bild eines Paketes 16 in einem zweiten Schärfebereich 32 aufzunehmen. Hierbei weist der zweite Schärfebereich 32 einen größeren Abstand zum Kamerasystem aufweist als der erste Schärfebereich 30. Die erste Kameraeinheit 20 nimmt somit ein Bild eines Paketes 16 in einem Nahbereich auf, wohingegen die zweite Kameraeinheit 24 ein Bild eines Paketes 16 in einem Mittel- und Fernbereich aufnimmt. Nah-, Mittel- und Fernbereich beziehen sich hierbei jeweils auf den Abstand zwischen dem Kamerasystem 12 und den jeweiligen auf dem Förderband 14 bewegten Paketen 16. Wie in Fig. 1 gezeigt, grenzt der Abstandsbereich des ersten Schärfebereichs 30 im Nahbereich bündig an den Abstandsbereich des zweiten Schärfebereichs 32 im Mittel- und Fernbereich an. Es sind jedoch auch Ausführungsformen möglich, die eine Überschneidung der Abstandsbereiche oder eine Unterbrechung zwischen den jeweiligen Abstandsbereichen vorsehen.

Fig. 2 zeigt eine schematische Ansicht von unten von der Ausführungsform des Kamerasystems 12 der Fig. 1. Die gezeigte Unterseite des Kamerasystems 12 ist in der Etikettenerkennungsvorrichtung 10 der Fig. 1 in Richtung des Förderbands 14 ausgerichtet. Der erste Bildsensor 22 für den Nahbereich weist eine niedrigere Bildauflösung und eine kleinere lichtempfindliche Fläche auf als der zweite Bildsensor 26 für den Mittel- und Fernbereich. Alternativ können die lichtempfindlichen Flächen des ersten Bildsensors 22 und des zweiten Bildsensors 26 auch gleich groß sein. Wie in Fig. 2 gezeigt, umfasst das Kamerasystem 12 zudem eine Beleuchtungsvorrichtung 34, die durch LEDs 36 gebildet wird, welche an der Unterseite des Kamerasystems 12 rechteckförmig um den ersten Bildsensor 22 und den zweiten Bildsensor 26 angeordnet sind.

Um alle Pakete 16 mit kleinem Abstand zwischen Paket 16 und Kamerasystem 12 bei einer schnellen Bandgeschwindigkeit des Förderbands 14 erfassen zu können, weist die erste Kameraeinheit 20 eine erste Bildwiederholrate auf, die größer ist als eine zweite Bildwiederholrate der zweiten Kameraeinheit 24. Da der erste Bildsensor 22 eine geringere Bildauflösung als der zweite Bildsensor 26 aufweist, können die Bilddaten der ersten Kameraeinheit 20 trotz der größeren Bildwiederholrate mit geringen Anforderungen an die Rechenleistung des Prozessors 28 verarbeitet werden. Die zweite Kameraeinheit 24, die den Mittel- und Fernbereich erfasst und abbildet, läuft mit einer niedrigen Bildwiederholrate, da die Pakete 16 sich länger im Sichtbereich der zweiten Kameraeinheit 24 befinden. Dadurch ergeben sich auch für den Mittel- und Fernbereich niedrige Anforderungen an die die Rechenleistung des Prozessors 28 zur Verarbeitung der Bilddaten des zweiten Bildsensors 26. Zur Beleuchtung der Pakete 16 auf dem Förderband 14 senden die LEDs 36 der Beleuchtungsvorrichtung 34 gemäß einer Taktrate periodisch Licht aus, wobei die Taktrate mit der ersten Bildwiederholrate und/oder der zweiten Bildwiederholrate synchronisiert sein kann.

Der Prozessor 28 ist dazu ausgebildet, Bilddaten des ersten Bildsensors 22 und Bilddaten des zweiten Bildsensors 26 zu verarbeiten. Die Verarbeitung erfolgt, sobald die Bilddaten des ersten Bildsensors 22 oder des zweiten Bildsensors 26 vorhanden und für den Prozessor 28 zur Verarbeitung verfügbar sind. Hierbei erfolgt die Verarbeitung der Bilddaten der jeweiligen Bildsensoren 22 und 26 bevorzugt komplett autark voneinander, wodurch die Verarbeitung der Bilddaten des ersten Bildsensors 22 und des zweiten Bildsensors 26 im Prozessor 28 gleichzeitig und simultan erfolgen kann.

Da das Kamerasystem 12 über zwei Bildsensoren 22 und 26 verfügt, die jeweils den Nahbereich und den Mittel- oder Fernbereich abdecken, weist das Kamerasystem 22 einen großen Schärfebereich auf, der sich aus der Kombination des ersten Schärfebereichs 30 der ersten Kameraeinheit 20 und des zweiten Schärfebereichs 32 der zweiten Kameraeinheit 24 ergibt. Das Kamerasystem 12 erfasst somit sehr zuverlässig Pakete 16, welche große Unterschiede in den jeweiligen Abständen zwischen Kamerasystem 12 und Paket 16 aufweisen.

Da das Kamerasystem 12 nicht situativ auf unterschiedliche Abstände reagieren muss, ist zum Erreichen des großen Schärfebereichs keine manuelle oder mechanische Einstellung des Fokus oder der Blendenzahl in den jeweiligen Kameraobjektiven notwendig. Das Kamerasystem 12 weist deshalb keine beweglichen Teile zur Fokusverstellung auf, was die Defektanfälligkeit des Kamerasystems 12 vermindert.

Das erfindungsgemäße Kamerasystem 12 ist somit verschleißarm, effizient und kostengünstig und ermöglicht eine zuverlässige Erfassung und Identifizierung von Objekten wie den in der Fig. 1 gezeigten Paketen 16.

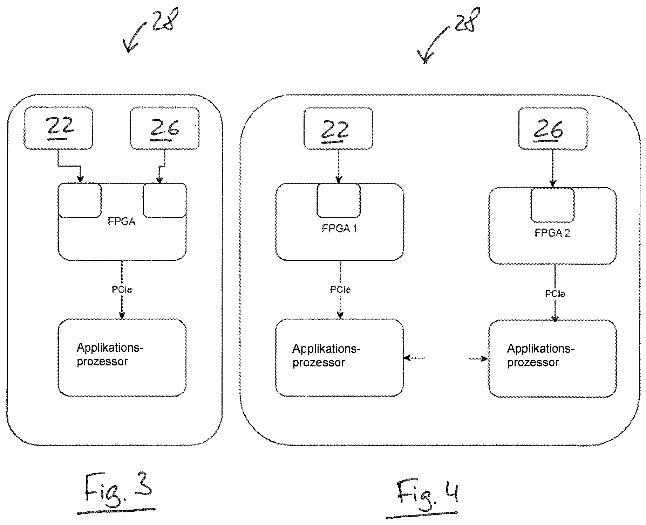

Fig. 3 zeigt eine erste Ausführungsform eines Prozessors 28 des Kamerasystems 12 der Fig. 1 und 2. Der Prozessor 28 umfasst einen FPGA (Field Programmable Gate Array), welcher für jeden Bildsensor 22, 26 eine eigene Verarbeitungspipeline für die Bilddaten aufweist. Der Prozessor 28 umfasst weiterhin einen Applikationsprozessor, welcher z.B. über PCI-Express (PCIe) mit dem FPGA gekoppelt ist, wobei der Applikationsprozessor die Erkennung der Etikettencodes in den Bilddaten der Bildsensoren 22, 26 vornimmt.

Fig. 4 zeigt eine zweite Ausführungsform eines Prozessors 28 des Kamerasystems 12 der Fig. 1 und 2. Im Unterschied zur Ausführungsform der Fig. 3 weist diese Ausführungsform jeweils zwei FPGAs (FPGA1 und FPGA2), welche jeweils für jeden Bildsensor 22, 26 eine eigene Verarbeitungspipeline für die Bilddaten aufweisen. Die beiden FPGAs sind jeweils über PCIe an einen von zwei Applikationsprozessoren zur Erkennung der Etikettencodes in den Bilddaten der Bildsensoren 22, 26 gekoppelt. Die Applikationsprozessoren können dabei dazu ausgebildet sein, die jeweiligen Ergebnisse der Erkennung der Etikettencodes untereinander auszutauschen.

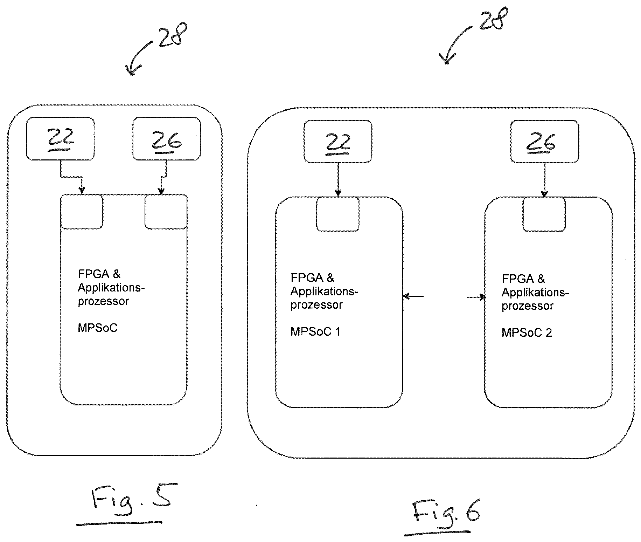

Fig. 5 und 6 zeigen eine dritte und vierte Ausführungsform eines Prozessors 28 des Kamerasystems 12 der Fig. 1 und 2, bei der jeweils der FPGA und der Applikationsprozessor in einem Multi-Processor System on Chip (MPSoC) Modul zusammengefasst sind.

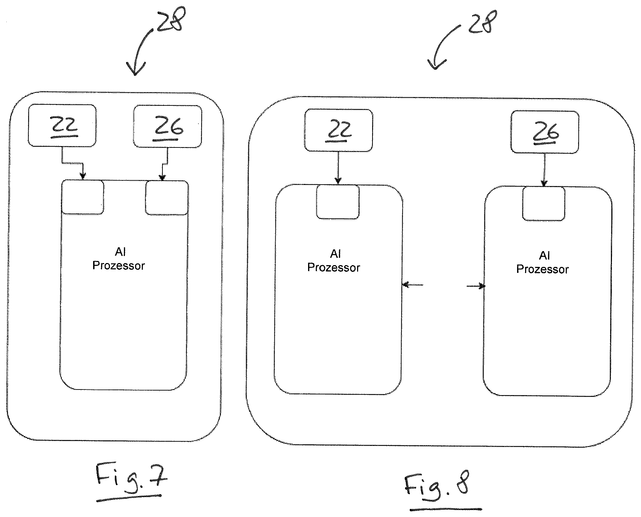

Fig. 7 und 8 zeigen eine fünfte und sechste Ausführungsform eines Prozessors 28 des Kamerasystems 12 der Fig. 1 und 2, bei denen die Kombination von FPGA und Applikationsprozessor jeweils durch einem Artificial Intelligence (AI) Prozessor ersetzt wurde.

### Bezugszeichen

- 10: Etikettenerkennungsvorrichtung
- 12: Kamerasystem
- 14: Förderband
- 16: Paket
- 18: Förderrichtung
- 20: erste Kameraeinheit
- 22: erster Bildsensor
- 24: zweite Kameraeinheit
- 26: zweiter Bildsensor
- 28: Prozessor
- 30: erster Schärfebereich
- 32: zweiter Schärfebereich
- 34: Beleuchtungsvorrichtung
- 36: LED

## Patentansprüche

1. Kamerasystem (12) für eine Etikettenerkennungsvorrichtung (10), wobei
das Kamerasystem (12) dazu ausgebildet ist, 1D- und/oder 2D Etikettencodes auf Objekten (16) zu erkennen, die insbesondere durch ein Förderband (14) bewegt werden, wobei das Kamerasystem (12) eine erste Kameraeinheit (20) mit einem ersten Kameraobjektiv und einem ersten Bildsensor (22) sowie zumindest einen Prozessor (28) umfasst,
wobei das Kamerasystem (12) zumindest eine zweite Kameraeinheit (24) mit einem zweiten Kameraobjektiv und einem zweiten Bildsensor (26) umfasst,
wobei der erste Bildsensor (22) der ersten Kameraeinheit (20) dazu ausgebildet ist, ein Bild eines Objektes (16) in einem ersten Schärfebereich (30) aufzunehmen,
wobei der zweite Bildsensor (26) der zweiten Kameraeinheit (24) dazu ausgebildet ist, ein Bild eines Objektes (16) in einem zweiten Schärfebereich (32) aufzunehmen,
wobei der zweite Schärfebereich (32) einen größeren Abstand zum Kamerasystem (12) aufweist als der erste Schärfebereich (30), und
wobei der Prozessor (28) dazu ausgebildet ist, Bilddaten des ersten Bildsensors (22) und Bilddaten des zweiten Bildsensors (26) zu verarbeiten **dadurch gekennzeichnet, dass**
der erste Bildsensor (22) eine erste Bildauflösung aufweist, welche kleiner ist als eine zweite Bildauflösung des zweiten Bildsensors (26).

2. Kamerasystem (12) nach Anspruch 1, wobei der erste Schärfebereich (30) und der zweite Schärfebereich (32) voreingestellt ist.

3. Kamerasystem (12) nach Anspruch 2, wobei der erste Schärfebereich (30) und der zweite Schärfebereich (32) während des Betriebs des Kamerasystems (12) jeweils unverändert bleiben und jeweils den voreingestellten Wert aufweisen.

4. Kamerasystem (12) nach einem der vorhergehenden Ansprüche, wobei der erste Schärfebereich (30) eine größere Schärfentiefe aufweist als der zweite Schärfebereich (32).

5. Kamerasystem (12) nach einem der vorhergehenden Ansprüche, wobei der erste Bildsensor (22) eine erste lichtempfindliche Fläche aufweist, die gleich groß ist wie eine zweite lichtempfindliche Fläche des zweiten Bildsensors (26).

6. Kamerasystem (12) nach einem der vorhergehenden Ansprüche, wobei die erste Kameraeinheit (20) eine erste Bildwiederholrate aufweist, die größer ist als eine zweite Bildwiederholungsrate der zweiten Kameraeinheit (24), oder wobei die erste Kameraeinheit (20) eine erste Bildwiederholrate aufweist, die gleich groß ist wie eine zweite Bildwiederholungsrate der zweiten Kameraeinheit (24).

7. Kamerasystem (12) nach einem der vorhergehenden Ansprüche, zusätzlich umfassend eine Beleuchtungsvorrichtung (34), die dazu ausgebildet ist, das Objekt (16) zu beleuchten, wobei die Beleuchtungsvorrichtung (34) gemäß einer Taktrate periodisch Licht aussendet, welche mit der ersten Bildwiederholrate und/oder der zweiten Bildwiederholungsrate synchronisiert ist.

8. Kamerasystem (12) nach einem der vorhergehenden Ansprüche, zusätzlich umfassend eine dritte Kameraeinheit mit einem dritten Kameraobjektiv und einem dritten Bildsensor,
wobei der dritte Bildsensor der dritten Kameraeinheit dazu ausgebildet ist, ein Bild eines Objektes (16) in einem dritten Schärfebereich aufzunehmen, wobei der dritte Schärfebereich einen größeren Abstand zum Kamerasystem (12) aufweist als der zweite Schärfebereich (32), und wobei der Prozessor (28) dazu ausgebildet ist, Bilddaten des dritten Bildsensors zu verarbeiten, insbesondere wobei der dritte Schärfebereich voreinstellt ist und während des Betriebs des Kamerasystems (12) unverändert bleibt und den voreingestellten Wert aufweist.

9. Kamerasystem (12) nach Anspruch 8, wobei der dritte Schärfebereich eine Schärfentiefe aufweist, die zumindest gleich groß ist wie die Schärfentiefe des zweiten Schärfebereichs (32), und/oder
wobei der dritte Bildsensor eine dritte Bildauflösung aufweist, welche größer ist als die erste Bildauflösung des ersten Bildsensors (22), insbesondere wobei die dritte Bildauflösung zumindest gleich groß ist wie die zweite Bildauflösung des zweiten Bildsensors (26).

10. Kamerasystem (12) nach Anspruch 8 oder 9, wobei die dritte lichtempfindliche Fläche zumindest gleich groß ist wie die zweite lichtempfindliche Fläche des zweiten Bildsensors (26).

11. Kamerasystem (12) nach einem der Ansprüche 8 bis 10,
wobei die dritte Kameraeinheit eine dritte Bildwiederholrate aufweist, welche kleiner ist als eine erste Bildwiederholrate der ersten Kameraeinheit (20), insbesondere wobei die dritte Bildwiederholrate höchstens gleich groß ist wie die zweite Bildwiederholrate der zweiten Kameraeinheit (24), oder wobei die dritte Kameraeinheit eine dritte Bildwiederholrate aufweist, welche gleich groß ist wie die erste Bildwiederholrate der ersten Kameraeinheit (20) und die zweite Bildwiederholrate der zweiten Kameraeinheit (24).

12. Kamerasystem (12) nach Anspruch 7, wobei die Taktrate der Beleuchtungsvorrichtung (34) mit der ersten Bildwiederholrate und/oder der zweiten Bildwiederholrate und/oder der dritten Bildwiederholrate synchronisiert ist.

13. Kamerasystem (12) nach einem der vorhergehenden Ansprüche, wobei die jeweilige Kameraeinheit (22, 24) als Zeilenkamera oder als 2D-Kamera ausgebildet ist.

14. Etikettenerkennungsvorrichtung (10), welche dazu ausgebildet ist, 1D- und/oder oder 2D Etikettencodes auf Objekten (16) zu identifizieren und zu decodieren, die durch ein Förderband (14) bewegt werden, umfassend ein Kamerasystem (12) nach einem der Ansprüche 1 bis 13.

## Claims

1. A camera system (12) for a label recognition apparatus (10), wherein the camera system (12) is configured to recognize 1D and/or 2D label codes on objects (16) which are in particular moved by a conveyor belt (14), wherein the camera system (12) comprises a first camera unit (20) having a first camera lens and having a first image sensor as well as at least one processor (28),
wherein the camera system (12) comprises at least a second camera unit (24) having a second camera lens and having a second image sensor (26), wherein the first image sensor (22) of the first camera unit (20) is configured to record an image of an object (16) in a first focus region (30),
wherein the second image sensor (26) of the second camera unit (24) is configured to record an image of an object (16) in a second focus region (32),
wherein the second focus region (32) has a larger distance from the camera system (12) than the first focus region (30), and
wherein the processor (28) is configured to process image data of the first image sensor (22) and image data of the second image sensor (26), **characterized in that**
the first image sensor (22) has a first image resolution which is smaller than a second image resolution of the second image sensor (26).

2. A camera system (12) according to claim 1, wherein the first focus region (30) and the second focus region (32) are preset.

3. A camera system (12) according to claim 2, wherein the first focus region (30) and the second focus region (32) each remain unchanged during the operation of the camera system (12) and each have the preset value.

4. A camera system (12) according to any one of the preceding claims, wherein the first focus region (30) has a larger depth of field than the second focus region (32).

5. A camera system (12) according to any one of the preceding claims, wherein the first image sensor (22) has a first light-sensitive surface which is the same size as a second light-sensitive surface of the second image sensor (26).

6. A camera system (12) according to any one of the preceding claims, wherein the first camera unit (20) has a first frame repetition rate which is greater than a second frame repetition rate of the second camera unit (24), or wherein the first camera unit (20) has a first frame repetition rate which is equal to a second frame repetition rate of the second camera unit (24).

7. A camera system (12) according to any one of the preceding claims, additionally comprising an illumination device (34) which is configured to illuminate the object (16), wherein the illumination device (34) periodically emits light in accordance with a clock rate which is synchronized with the first frame repetition rate and/or the second frame repetition rate.

8. A camera system (12) according to any one of the preceding claims, additionally comprising a third camera unit having a third camera lens and having a third image sensor,
wherein the third image sensor of the third camera unit is configured to record an image of an object (16) in a third focus region, wherein the third focus region has a larger distance from the camera system (12) than the second focus region (32), and wherein the processor (28) is configured to process image data of the third image sensor, in particular wherein the third focus region is preset, remains unchanged during the operation of the camera system (12) and has the preset value.

9. A camera system (12) according to claim 8, wherein the third focus region has a depth of field which is at least as large as the depth of field of the second focus region (32), and/or
wherein the third image sensor has a third image resolution which is greater than the first image resolution of the first image sensor (22), in particular wherein the third image resolution is at least as large as the second image resolution of the second image sensor (26).

10. A camera system (12) according to claim 8 or 9, wherein the third light-sensitive surface is at least as large as the second light-sensitive surface of the second image sensor (26).

11. A camera system (12) according to any one of the claims 8 to 10,
wherein the third camera unit has a third frame repetition rate which is smaller than a first frame repetition rate of the first camera unit (20), in particular wherein the third frame repetition rate is at most equal to the second frame repetition rate of the second camera unit (24), or wherein the third camera unit has a third frame repetition rate which is equal to the first frame repetition rate of the first camera unit (20) and the second frame repetition rate of the second camera unit (24).

12. A camera system (12) according to claim 7, wherein the clock rate of the illumination device (34) is synchronized with the first frame repetition rate and/or the second frame repetition rate and/or the third frame repetition rate.

13. A camera system (12) according to any one of the preceding claims, wherein the respective camera unit (22, 24) is configured as a line scan camera or as a 2D camera.

14. A label recognition apparatus (10) which is configured to identify and decode 1D and/or 2D label codes on objects (16) which are moved by a conveyor belt (14), said label recognition apparatus (10) comprising a camera system (12) according to any one of the claims 1 to 13.

## Revendications

1. Système de caméra (12) pour un dispositif de reconnaissance d'étiquettes (10), le système de caméra (12) étant conçu pour reconnaître des codes d'étiquettes 1D et/ou 2D sur des objets (16) qui, en particulier, sont déplacés par un convoyeur à bande (14), le système de caméra (12) comprenant une première unité de caméra (20), munie d'un premier objectif de caméra et d'un premier capteur d'image (22), ainsi qu'au moins un processeur (28),
le système de caméra (12) comprenant au moins une deuxième unité de caméra (24) munie d'un deuxième objectif de caméra et d'un deuxième capteur d'image (26),
le premier capteur d'image (22) de la première unité de caméra (20) étant conçu pour enregistrer une image d'un objet (16) dans une première zone de mise au point (30),
le deuxième capteur d'image (26) de la deuxième unité de caméra (24) étant conçu pour enregistrer une image d'un objet (16) dans une deuxième zone de mise au point (32),
la deuxième zone de mise au point (32) étant plus éloignée du système de caméra (12) que la première zone de mise au point (30), et
le processeur (28) étant conçu pour traiter les données d'image du premier capteur d'image (22) et les données d'image du deuxième capteur d'image (26),
**caractérisé en ce que** le premier capteur d'image (22) présente une première résolution d'image qui est inférieure à une deuxième résolution d'image du deuxième capteur d'image (26).

2. Système de caméra (12) selon la revendication 1,
dans lequel la première zone de mise au point (30) et la deuxième zone de mise au point (32) sont préréglées.

3. Système de caméra (12) selon la revendication 2,
dans lequel la première zone de mise au point (30) et la deuxième zone de mise au point (32) restent chacune inchangées pendant le fonctionnement du système de caméra (12) et présentent chacune la valeur préréglée.

4. Système de caméra (12) selon l'une des revendications précédentes, dans lequel la première zone de mise au point (30) présente une profondeur de champ supérieure à celle de la deuxième zone de mise au point (32).

5. Système de caméra (12) selon l'une des revendications précédentes, dans lequel le premier capteur d'image (22) présente une première surface photosensible qui est de même taille que celle d'une deuxième surface photosensible du deuxième capteur d'image (26).

6. Système de caméra (12) selon l'une des revendications précédentes, dans lequel la première unité de caméra (20) présente une première fréquence de rafraîchissement qui est supérieure à une deuxième fréquence de rafraîchissement de la deuxième unité de caméra (24), ou la première unité de caméra (20) présente une première fréquence de rafraîchissement qui est égale à une deuxième fréquence de rafraîchissement de la deuxième unité de caméra (24).

7. Système de caméra (12) selon l'une des revendications précédentes, comprenant en outre un dispositif d'éclairage (34) conçu pour éclairer l'objet (16), le dispositif d'éclairage (34) émettant périodiquement de la lumière selon une fréquence d'horloge qui est synchronisée avec la première fréquence de rafraîchissement et/ou avec la deuxième fréquence de rafraîchissement.

8. Système de caméra (12) selon l'une des revendications précédentes, comprenant en outre une troisième unité de caméra munie d'un troisième objectif de caméra et d'un troisième capteur d'image,
le troisième capteur d'image de la troisième unité de caméra étant conçu pour enregistrer une image d'un objet (16) dans une troisième zone de mise au point, la troisième zone de mise au point étant plus éloignée du système de caméra (12) que la deuxième zone de mise au point (32), et le processeur (28) étant conçu pour traiter les données d'image du troisième capteur d'image, en particulier, la troisième zone de mise au point étant préréglée et restant inchangée pendant le fonctionnement du système de caméra (12) et présentant la valeur préréglée.

9. Système de caméra (12) selon la revendication 8,
dans lequel la troisième zone de mise au point présente une profondeur de champ qui est au moins égale à la profondeur de champ de la deuxième zone de mise au point (32), et/ou
le troisième capteur d'image présente une troisième résolution d'image qui est supérieure à la première résolution d'image du premier capteur d'image (22), en particulier, la troisième résolution d'image étant au moins égale à la deuxième résolution d'image du deuxième capteur d'image (26).

10. Système de caméra (12) selon la revendication 8 ou 9,
dans lequel la troisième surface photosensible est de taille au moins égale à celle la deuxième surface photosensible du deuxième capteur d'image (26).

11. Système de caméra (12) selon l'une des revendications 8 à 10,
dans lequel la troisième unité de caméra présente une troisième fréquence de rafraîchissement qui est inférieure à une première fréquence de rafraîchissement de la première unité de caméra (20),
en particulier, la troisième fréquence de rafraîchissement est au maximum égale à la deuxième fréquence de rafraîchissement de la deuxième unité de caméra (24), ou
la troisième unité de caméra présente une troisième fréquence de rafraîchissement qui est égale à la première fréquence de rafraîchissement de la première unité de caméra (20) et à la deuxième fréquence de rafraîchissement de la deuxième unité de caméra (24).

12. Système de caméra (12) selon la revendication 7,
dans lequel la fréquence d'horloge du dispositif d'éclairage (34) est synchronisée avec la première fréquence de rafraîchissement et/ou avec la deuxième fréquence de rafraîchissement et/ou avec la troisième fréquence de rafraîchissement.

13. Système de caméra (12) selon l'une des revendications précédentes, dans lequel l'unité de caméra respective (22, 24) est conçue comme une caméra linéaire ou comme une caméra 2D.

14. Dispositif de reconnaissance d'étiquettes (10) conçu pour identifier et décoder des codes d'étiquettes 1D et/ou 2D sur des objets (16) déplacés par un convoyeur à bande (14), comprenant un système de caméra (12) selon l'une des revendications 1 à 13.
